# EUROPÄISCHE PATENTSCHRIFT

(11) **EP 4 127 931 B1**
(45) Veröffentlichungstag und Bekanntmachung des Hinweises auf die Patenterteilung: **06.05.2026**
(21) Anmeldenummer: 21716344.3
(22) Anmeldetag: 30.03.2021
(51) Int. Cl.: G06F 11/14, B65B 57/00

(54) **VERFAHREN ZUM BETRIEB EINER ERSTEN UND EINER ZWEITEN NAHRUNGSMITTELMASCHINE, SPEICHEREINRICHTUNG UND NAHRUNGSMITTELMASCHINE**
METHOD FOR OPERATING A FIRST AND A SECOND FOOD MACHINE, STORAGE DEVICE, AND FOOD MACHINE
PROCÉDÉ DE FONCTIONNEMENT D'UNE PREMIÈRE ET D'UNE SECONDE MACHINE ALIMENTAIRE, DISPOSITIF DE STOCKAGE ET MACHINE ALIMENTAIRE

(30) Priorität: 01.04.2020 DE 102020204258; 09.07.2020 DE 102020208618
(43) Veröffentlichungstag der Anmeldung: 08.02.2023
(73) Patentinhaber: GEA Food Solutions Germany GmbH, 35216 Biedenkopf-Wallau (DE)
(72) Erfinder: CILINGIR, Erdal, 57334 Bad Laasphe (DE); DE HOOG, Peter, 6049 LC Herten (NL); MAIDEL, Stefan, 87437 Kempten (DE); THEELEN, Dennis, 5961 ZL Horst (NL); REHN, Jochen, 35216 Biedenkopf-Wallau (DE); DA COSTA MOREIRA, Nelson, 35216 Biedenkopf (DE)
(74) Vertreter: Kutzenberger Wolff & Partner
(86) Internationale Anmeldenummer: PCT/EP2021/058334
(87) Internationale Veröffentlichungsnummer: WO 2021/198278

(56) Entgegenhaltungen:
- DE-A1- 102008 020 219
- US-A1- 2015 019 005
- US-B1- 7 299 103

## Beschreibung

### Stand der Technik

Die vorliegende Erfindung betrifft ein Verfahren zum Betrieb einer ersten Nahrungsmittelmaschine, insbesondere Nahrungsmittelverarbeitungsmaschine oder Nahrungsmittelverpackungsmaschine, und einer zweiten Nahrungsmittelmaschine, insbesondere Nahrungsmittelverarbeitungsmaschine oder Nahrungsmittelverpackungsmaschine. Ferner betrifft die Erfindung eine Speichereinrichtung für eine Nahrungsmittelmaschine, insbesondere eine Nahrungsmittelverarbeitungsmaschine oder eine Nahrungsmittelverpackungsmaschine. Weitere Gegenstände der Erfindung sin eine Nahrungsmittelmaschine, insbesondere eine Nahrungsmittelverarbeitungsmaschine oder eine Nahrungsmittelverpackungsmaschine, mit einer Speichereinrichtung und eine Produktionslinie umfassend eine erste Nahrungsmittelmaschine, insbesondere Nahrungsmittelverarbeitungsmaschine oder Nahrungsmittelverpackungsmaschine, und eine zweite Nahrungsmittelmaschine, insbesondere Nahrungsmittelverarbeitungsmaschine oder Nahrungsmittelverpackungsmaschine.

Nahrungsmittelmaschinen, wie beispielsweise Nahrungsmittelverarbeitungsmaschinen, insbesondere Aufschneidemaschinen oder Slicer, oder Nahrungsmittelverpackungsmaschinen, insbesondere Form-Fill-Seal-Verpackungsmaschinen, sind üblicherweise vielfältig konfigurierbar, beispielsweise um die Fertigung verschiedener Nahrungsmittelprodukte und/oder verschiedener Verpackungen bzw. das Verpacken der Nahrungsmittelprodukte in verschiede Verpackungen mit derselben Maschine zu ermöglichen. Die Konfiguration dieser Nahrungsmittelmaschinen ist typischerweise in einem Datensatz hinterlegt, der in einer Speichereinrichtung der jeweiligen Nahrungsmittelmaschine gespeichert ist. Oftmals ist vorgesehen, dass der Datensatz von einem Bediener der Maschine verändert werden kann, beispielsweise um die Konfiguration an Änderungen in der Produktion anzupassen oder die Produktion auf ein anderes Produkt umzustellen.

Bei gewissen Fehlerzuständen kann es zu einem Verlust von Daten in der Speichereinrichtung der Nahrungsmittelmaschine kommen. In einem solchen Fall, muss die Nahrungsmittelmaschine in der Regel relativ aufwändig, ggf. sogar manuell, konfiguriert werden, um die Wiederaufnahme der Produktion mit der Nahrungsmittelmaschine zu ermöglichen.

Die US 7 299 103 B1 offenbart ein System mit einer ersten und einer zweiten Verpackungsmaschine, wobei ein zum Betrieb der ersten Verpackungsmaschine erforderlicher Datensatz in einer Speichereinheit der ersten Verpackungsmaschine gespeichert wird. Der Datensatz der ersten Verpackungsmaschine kann von einem Techniker in eine zweite Speichereinheit einer zweiten Verpackungsmaschine übertragen werden, um die zweite Verpackungsmaschine mit dem Datensatz der ersten Verpackungsmaschine zu betreiben.

In der DE 10 2008 020219 A1 wird eine Verpackungsmaschine beschrieben, die eine speicherprogrammierbare Steuerung (SPS) und eine Bedieneinheit mit einer Benutzerschnittstelle (HMI) und einen Rechner umfasst, auf dem ein HMI-Betriebssystem und ein Anwendungsprogramm laufen. Der Bedieneinheit ist ein externes Speichermedium zugeordnet, auf dem zumindest das HMI-Betriebssystem und das Anwendungsprogramm in einer selbsttätig lauffähigen Version gespeichert sind. Bei Ausfall der Benutzerschnittstelle wird auf einem Ersatz-Computer mittels des Speichermediums ein virtueller Rechner erzeugt, auf dem das HMI-Betriebssystem mit dem Anwendungsprogramm läuft und der an die speicherprogrammierbare Steuerung der Verpackungsmaschine angeschlossen wird und deren Steuerung übernimmt.

### Offenbarung der Erfindung

Die Aufgabe der vorliegenden Erfindung ist es, die Verfügbarkeit einer Nahrungsmittelmaschine bzw. einer Produktionslinie mit mehreren Nahrungsmittelmaschinen zu erhöhen.

Zur Lösung der Aufgabe wird gemäß der Erfindung ein Verfahren zum Betrieb einer ersten Nahrungsmittelmaschine, insbesondere Nahrungsmittelverarbeitungsmaschine oder Nahrungsmittelverpackungsmaschine, und einer zweiten Nahrungsmittelmaschine, insbesondere Nahrungsmittelverarbeitungsmaschine oder Nahrungsmittelverpackungsmaschine, mit den Merkmalen des Patentanspruchs 1 vorgeschlagen.

Durch das gemäß der Erfindung vorgesehene Speichern des zum Betrieb der ersten Nahrungsmittelmaschine erforderlicher Datensatzes sowohl in der ersten Speichereinheit als auch in der zweiten Speichereinheit, kann die Wiederherstellung des Datensatzes nach einem Datenverlust in der ersten Speichereinheit erleichtert werden. Eine solche Wiederherstellung kann erfolgen, in dem eine Kopie des Datensatzes von der zweiten Speichereinheit in die erste Speichereinheit übertragen wird. Hierdurch kann die erste Nahrungsmittelmaschine und damit auch die Produktionslinie, deren Teil die erste Nahrungsmittelmaschine ist, schneller wieder aktiviert werden, wodurch die Verfügbarkeit der Nahrungsmittelmaschine bzw. der Produktionslinie erhöht werde kann.

Gemäß der Erfindung ist vorgesehen, dass der erforderliche Datensatz der ersten Nahrungsmittelmaschine nicht für den Betrieb der zweiten Nahrungsmittelmaschine erforderlich ist, beispielsweise wenn die erste Nahrungsmittelmaschine und die zweite Nahrungsmittelmaschine nicht identisch bzw. nicht von demselben Typ sind. Dieser Fall kann gegeben sein, wenn die erste Nahrungsmittelmaschine eine Aufschneidemaschine oder ein Slicer ist und die zweite Nahrungsmittelmaschine eine Form-Fill-Seal-Verpackungsmaschine ist. Alternativ kann vorgesehen sein, dass die erste Nahrungsmittelmaschine und die zweite Nahrungsmittelmaschine von demselben Typ sind, aber unterschiedliche Prozessschritte ausführen. Dieser Fall kann gegeben sein, wenn die erste und die zweite Nahrungsmittelmaschine eine Form-Fill-Seal-Verpackungsmaschine sind. Dabei ist der zum Betrieb der ersten Nahrungsmittelmaschine erforderliche Datensatz eindeutig der ersten Nahrungsmittelmaschine zugeordnet.

Gemäß einer vorteilhaften Ausgestaltung der Erfindung ist vorgesehen, dass der Datensatz über eine drahtlose oder drahtgebundene Kommunikationsverbindung an die zweite Speichereinheit der zweiten Nahrungsmittelmaschine übertragen wird. Der Datensatz wird bevorzugt von der ersten Nahrungsmittelmaschine an die zweite Nahrungsmittelmaschine übertragen. Alternativ kann vorgesehen sein, dass der Datensatz von einer Produktionslinien-Steuereinrichtung an die zweite Speichereinheit der zweiten Nahrungsmittelmaschine übertragen wird und bevorzugt auch an die erste Speichereinheit der ersten Nahrungsmittelmaschine.

Eine vorteilhafte Ausgestaltung der Erfindung sieht vor, dass der Datensatz zum Betrieb der ersten Nahrungsmittelmaschine, Konfigurationsdaten zum Betrieb der ersten Nahrungsmittelmaschine und/oder Eingabe-Daten und/oder Benutzer-Daten umfasst. Konfigurationsdaten beschreiben die konkrete Ausgestaltung der Nahrungsmittelmaschine, beispielsweise den Typ von Stationen, Reihenfolge die Reihenfolge von Stationen oder die Anzahl von Stationen, beispielsweise Schneidestationen wie Längs- oder Querschneidestationen, oder auch Details von Stationen, wie beispielsweise des Schneidhubes. Eingabe-Daten werden mit einer Eingabeeinrichtung der ersten Nahrungsmittelmaschine erfasst. Diese Eingabe-Daten können Parameter der Nahrungsmittelmaschine sein oder diese betreffen, beispielsweise durch einen Bediener vorgebbare Eigenschaften der Nahrungsmittelmaschine. Solche Parameter können beispielsweise Zeitangaben zum Aktivieren und/oder Deaktivieren von Elementen der Nahrungsmittelmaschine, Angaben zum Aktivierungszustand von Funktionen oder Elementen der Nahrungsmittelmaschine, oder andere einstellbare physikalische Größen und/oder Sollwerte von Regelkreisen sein. Eingabe-Daten können beispielsweise Abmessungen von Verpackungen oder Auftragsdaten wie Auftragsnummer, Chargen-Nummer, Anzahl von Verpackungen, zu verwendendes Rezept, zu verwendende Verpackungsfolien und Etiketten, Anwenderkommentare und/oder nur zur Information dienende Daten sein. Der zum Betrieb der ersten Nahrungsmittelmaschine erforderliche Datensatz im Sinne der Erfindung umfasst insbesondere keine Messwerte, die zur Steuerung der Verpackungsmaschine herangezogen werden. Allerdings kann der zum Betrieb der ersten Nahrungsmittelmaschine erforderliche Datensatz Messwerte umfassen, die zur Erzeugung von Informationen herangezogen werden können, die einem Benutzer der Nahrungsmittelmaschine darstellbar sind. Solche dem Benutzer darstellbare Informationen können beispielsweise statistische Informationen und/oder Referenzinformationen und/oder Abweichungen von einem Referenzwert oder Referenzverlauf sein, die sich beim Betrieb der Nahrungsmittelmaschine ergeben.

Bei dem Bediener der Nahrungsmittelmaschine kann es sich um einen Arbeiter, einen Schichtleiter handeln und/oder einen Wartungsmitarbeiter handeln.

Gemäß einer vorteilhaften Ausgestaltung der Erfindung ist vorgesehen, dass der Datensatz zum Betrieb der ersten Nahrungsmittelmaschine, Benutzer-Daten umfasst. Die Benutzer-Daten können beispielsweise benutzerabhängige Berechtigungsdaten umfassen und/oder benutzerabhängige Maschineneinstellungen, z.B. benutzerabhängige Anzeigeeinstellungen.

Erfindungsgemäß ist eine Ausgestaltung, bei welcher ein Verlust des Datensatzes in der ersten Speichereinheit der ersten Nahrungsmittelmaschine erkannt wird und der Datensatz von der zweiten Speichereinheit der zweite Nahrungsmittelmaschine in die erste Speichereinheit übertragen wird. Durch das Übertragen des Datensatzes in die erste Speichereinheit kann der Verlust der Daten kompensiert werden und die erste Nahrungsmittelmaschine in einen funktionsfähigen Zustand versetzt werden.

Besonders bevorzugt ist es, wenn ein Verlust von Eingabe-Daten bzw. Benutzer-Daten des Datensatzes in der ersten Speichereinheit der ersten Nahrungsmittelmaschine erkannt wird und die Eingabe-Daten bzw. Benutzer-Daten des Datensatzes von der zweiten Speichereinheit der zweite Nahrungsmittelmaschine in die erste Speichereinheit übertragen werden. Gemäß einer derartigen Ausgestaltung kann ein teilweiser Verlust von Daten des Datensatzes, also von Eingabe-Daten bzw. Benutzer-Daten, durch ein teilweises Rückspielen des Datensatzes, also lediglich der Eingabe-Daten bzw. Benutzer-Daten oder auch nur von einem Teil davon, wie beispielsweise dem verlorengegangenen Teil, kompensiert werden.

Erfindungsgemäß ist eine Ausgestaltung des Verfahrens, bei welcher ein Verlust des Datensatzes in der ersten Speichereinheit der ersten Nahrungsmittelmaschine erkannt wird und die erste Nahrungsmittelmaschine durch eine Steuereinrichtung der zweiten Nahrungsmittelmaschine mithilfe des in der zweiten Speichereinheit gespeicherten Datensatzes gesteuert wird. Bei einer solchen Ausgestaltung übernimmt die Steuereinheit der zweiten Nahrungsmittelmaschine die Steuerung der ersten Nahrungsmittelmaschine. Diese Übernahme kann temporär erfolgen, beispielsweise solange, bis der zum Betrieb erforderliche Datensatz in der ersten Speichereinrichtung der ersten Nahrungsmittelmaschine wiederhergestellt ist. Alternativ kann die zweite Nahrungsmittelmaschine dauerhaft die Steuerung der ersten Nahrungsmittelmaschine übernehmen.

Eine vorteilhafte Ausgestaltung der Erfindung sieht vor, dass der Datensatz zum Betrieb der ersten Nahrungsmittelmaschine Auftrag-Daten für einen ersten Auftrag umfasst, die von einem Auftragsdatenverwaltungssystem über eine drahtlose oder drahtgebundene Kommunikationsverbindung übertragen werden. Die Auftrag-Daten können Daten zu den gemäß dem Auftrag herzustellenden Produkten und/oder Seriennummern und/oder Chargeninformationen enthalten.

Gemäß einer bevorzugten Ausgestaltung ist vorgesehen, dass dann, wenn Auftrag-Daten zu einem zweiten Auftrag durch das Auftragsdatenveraltungssystem nicht zur Verfügung gestellt werden, Auftrag-Daten für den ersten Auftrag von der zweiten Speichereinheit der zweiten Nahrungsmittelmaschine in die erste Speichereinheit übertragen werden. Durch das Übertragen des Datensatzes in die erste Speichereinheit kann der Verlust der Daten anhand der Daten eines vorherigen Auftrags kompensiert werden und die erste Nahrungsmittelmaschine in einen funktionsfähigen Zustand versetzt werden. Dabei kann es erforderlich sein, einige Daten manuell anzupassen, beispielsweise Seriennummern und/oder Chargeninformationen.

Gemäß einer vorteilhaften Ausgestaltung ist vorgesehen, dass die erste Nahrungsmittelmaschine und die zweite Nahrungsmittelmaschine Teil einer gemeinsamen Produktionslinie von mehreren Nahrungsmittelmaschinen sind, die eine dritte Nahrungsmittelmaschine umfasst, wobei ein zum Betrieb der zweiten Nahrungsmittelmaschine erforderlicher weiterer Datensatz in der zweiten Speichereinheit der zweiten Nahrungsmittelmaschine gespeichert wird, und wobei der zum Betrieb der zweiten Nahrungsmittelmaschine erforderliche weitere Datensatz zusätzlich in einer dritten Speichereinheit der dritten Nahrungsmittelmaschine gespeichert wird. Durch diese Verknüpfung jeweils zweier unterschiedlicher Nahrungsmittelmaschinen zum Speichern einer Kopie des jeweiligen relevanten Datensatzes, wird eine Kette gebildet. Bei einem Ausfall der ersten Nahrungsmittelmaschine, kann eine Kopie des für die erste Nahrungsmittelmaschine erforderlichen Datensatzes aus der zweiten Nahrungsmittelmaschine übertragen werden. Gleichzeitig ist die zweite Nahrungsmittelmaschine durch eine Kopie ihres Datensatzes abgesichert, der in einer weiteren Nahrungsmittelmaschine gespeichert ist. Ein Verlust des Datensatzes in der ersten Speichereinheit der ersten Nahrungsmittelmaschine hat daher keinen negativen Einfluss auf die zweite Nahrungsmittelmaschine.

Eine vorteilhafte Ausgestaltung sieht vor, dass die erste Nahrungsmittelmaschine und die zweite Nahrungsmittelmaschine Teil einer gemeinsamen Produktionslinie von mehreren Nahrungsmittelmaschinen sind, wobei, insbesondere sämtliche, zum Betrieb der Produktionslinie aus mehreren Nahrungsmittelmaschinen erforderliche Datensätze in der ersten Speichereinheit der ersten Nahrungsmittelmaschine und in der zweiten Speichereinheit der zweiten Nahrungsmittelmaschine gespeichert werden. Dadurch, dass mehrere, insbesondere sämtliche Datensätze in der ersten und der zweiten Speichereinheit gespeichert sind, kann bei Verlust eines der Datensätze wahlweise die erste Speichereinheit oder die weite Speichereinheit herangezogen werden, um den jeweiligen Datensatz an die jeweilige Nahrungsmittelmaschine zu übertragen.

Gemäß einer vorteilhaften Ausgestaltung ist vorgesehen, dass die erste Nahrungsmittelmaschine und die zweite Nahrungsmittelmaschine Teil einer gemeinsamen Produktionslinie von mehreren Nahrungsmittelmaschinen sind, die eine dritte Nahrungsmittelmaschine umfasst, wobei ein zum Betrieb der ersten Nahrungsmittelmaschine erforderlicher Datensatz in der ersten Speichereinheit der ersten Nahrungsmittelmaschine gespeichert wird, und wobei der zum Betrieb der ersten Nahrungsmittelmaschine erforderliche Datensatz zusätzlich in einer zweiten Speichereinheit der zweiten Nahrungsmittelmaschine gespeichert wird, wobei ein zum Betrieb der zweiten Nahrungsmittelmaschine erforderlicher weiterer Datensatz in der zweiten Speichereinheit der zweiten Nahrungsmittelmaschine gespeichert wird, und wobei der zum Betrieb der zweiten Nahrungsmittelmaschine erforderliche weitere Datensatz zusätzlich in einer dritten Speichereinheit der dritten Nahrungsmittelmaschine gespeichert wird, wobei ein zum Betrieb der dritten Nahrungsmittelmaschine erforderlicher zusätzlicher Datensatz in der dritten Speichereinheit der dritten Nahrungsmittelmaschine gespeichert wird, und wobei der zum Betrieb der dritten Nahrungsmittelmaschine erforderliche zusätzliche Datensatz zusätzlich in der ersten Speichereinheit der ersten Nahrungsmittelmaschine gespeichert wird. Durch diese Verknüpfung jeweils dreier unterschiedlicher Nahrungsmittelmaschinen zum Speichern einer Kopie des jeweiligen relevanten Datensatzes, wird ein Ring gebildet.

Bei einem Ausfall der ersten Nahrungsmittelmaschine kann eine Kopie des für die erste Nahrungsmittelmaschine erforderlichen Datensatzes aus der zweiten Nahrungsmittelmaschine übertragen werden. Gleichzeitig ist die zweite Nahrungsmittelmaschine durch eine Kopie ihres Datensatzes abgesichert, der in einer weiteren Nahrungsmittelmaschine gespeichert ist. Gleichzeitig ist die dritte Nahrungsmittelmaschine durch eine Kopie ihres Datensatzes abgesichert, der in einer weiteren Nahrungsmittelmaschine gespeichert ist. Ein Verlust des Datensatzes in der ersten Speichereinheit der ersten Nahrungsmittelmaschine hat daher keinen negativen Einfluss auf die zweite und dritte Nahrungsmittelmaschine; ebenso hat ein Verlust des Datensatzes in der zweiten Speichereinheit der zweiten Nahrungsmittelmaschine daher keinen negativen Einfluss auf die erste und dritte Nahrungsmittelmaschine; weiterhin hat ein Verlust des Datensatzes in der dritten Speichereinheit der dritten Nahrungsmittelmaschine keinen negativen Einfluss auf die erste und zweite Nahrungsmittelmaschine.

Der Fachmann versteht, dass auch andere Kombinationen der paarweisen Speicherung von einem Datensatz möglich sind.

Gemäß einer vorteilhaften Ausgestaltung der Erfindung ist vorgesehen, dass der zum Betrieb der ersten Nahrungsmittelmaschine erforderliche Datensatz ausgewählt wird, wobei zur Auswahl des Datensatzes ein Indikator durch eine Detektionseinrichtung erfasst wird und durch eine Auswahleinheit der Datensatz in Abhängigkeit von dem erfassten Indikator aus einer Liste vorgegebener Datensätze ermittelt wird. Der Indikator kann beispielsweise auf einem Auftragsdokument oder einem Behälter aufgebracht oder an einem solchen angeordnet sein.

Bevorzugt ist der Indikator ein optisch erfassbarer Indikator, beispielsweise ein Strichcode (Barcode) oder ein zweidimensionaler Code, und die Detektionseinrichtung ist eine optische Detektionseinrichtung, beispielsweise eine Strichcode-Detektionseinrichtung oder eine Detektionseinrichtung zum Detektieren eines zweidimensionalen Codes. Alternativ kann der Indikator ein durch ein elektromagnetisches Feld erfassbarer Indikator sein, beispielsweise ein RFID-Transponder, und die Detektionseinrichtung eine Detektionseinrichtung zum Auslesen eines durch ein elektromagnetisches Feld erfassbaren Indikators, beispielsweise ein RFID-Lesegerät.

Beschrieben wird ferner eine Speichereinrichtung für eine Nahrungsmittelmaschine, insbesondere eine Nahrungsmittelverarbeitungsmaschine oder eine Nahrungsmittelverpackungsmaschine, dadurch gekennzeichnet, dass die Speichereinrichtung dazu eingerichtet ist, einen zum Betrieb einer anderen Nahrungsmittelmaschine erforderlichen Datensatz zu empfangen, zu speichern und an die andere Nahrungsmittelmaschine zu übermitteln.

Beschrieben wird auch eine Nahrungsmittelmaschine, insbesondere eine Nahrungsmittelverarbeitungsmaschine oder eine Nahrungsmittelverpackungsmaschine, mit einer vorstehend beschriebenen Speichereinrichtung.

Die Nahrungsmittelmaschine kann beispielsweise als Schneidemaschine, Entfroster, Kutter, Mischer, Tiefzieh-Verpackungsmaschine, Vertikalform-Füllversiegelungsmaschine oder Horizontalform-Füllversiegelungsmaschine ausgebildet sein.

Die Nahrungsmittelmaschine kann geeignet sein für Fleisch, Geflügel, Fisch / Meeresfrüchte, Käse, Fleischersatz, Eiweißersatzprodukte wie aus Insekten oder Pilzen, gezüchtetes Fleisch, Gemüse, Pizza, Brot, Backwaren, Gebäck, Kekse oder ähnliches. Die als Nahrungsmittelverarbeitungsmaschine, insbesondere als Fleischverarbeitungsmaschine, ausgebildete Nahrungsmittelmaschine kann ausgebildet sein als Auftau-, Kutter-, Mixer-, Tumbler-, Zerkleiner-, Emulgier-, Mariniermaschine, Massiermaschine, Fleischinjektor, Filtrationsmaschine für Lake und/oder Fleischzutaten, Kühlmaschine für Lake, Fleischpresse, Gefriermaschine, Auftaumaschine, Zartmacher, Schüttelmaschine, Fettanalysemaschine, Pumpmaschine, Zerkleinerungsmaschine, Form- oder Portioniermaschine, Beschichtungsmaschine wie Teig-/ Panier-/ Brösel-/ Speiseölmaschine, Entstaubungsmaschine, Trocknungs- / Koch- / Bräunungs- / Brat- / Dämpf- / Sous-vide-Maschine, Bratmaschine, Grill, Räuchermaschine, Frittieröl-Filtermaschine, Ofen- / Heiz- / Kochanlage, Lebensmittelscanner, Aufschneidemaschine, Waage, Erkennungssystem für Fremdkörper wie Metall/ Kunststoff/ Knochen, Reinigungssystem für den Nahrungsmittelkontaktbereich z. B. für Injektionsnadeln, oder Transportsystem, Befüll- / Be- und/oder Entladesystem und/oder Fördersystem und/oder Dosiersystem. Die als Nahrungsmittelverpackungsmaschine ausgebildete Nahrungsmittelmaschine kann ausgebildet sein als Tiefziehverpackungsmaschine, vertikale Schlauchbeutelmaschine oder horizontale Schlauchbeutelmaschine, Flaschen-Abfüllmaschine, Abfüllmaschine, Etikettierer / Drucker, Lutscherform-/ Kühl-/ Einschlagmaschine, Lutscher-Verpackungsmaschine, Zuckerwürfelform-/ Trocknungs-/ Verpackungsmaschine, Ableger. Alternativ kann die Nahrungsmittelmaschine ein Automatisierungs- / Steuerungs- / Liniensteuerungssystem für eine oder mehrere der zuvor genannten Maschinen sein.

Ein weiterer Gegenstand der Erfindung ist eine Produktionslinie mit den Merkmalen des Patentanspruchs 13.

Die Nahrungsmittelmaschine kann ferner eine Kommunikationsschnittstelle zum Empfangen und/oder zum Senden von Daten aufweisen. Die Kommunikationsschnittstelle kann mit einer drahtlosen oder einer drahtgebundenen Kommunikationsverbindung gekoppelt sein.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den Erfindungsgedanken nicht einschränken.

### Kurze Beschreibung der Figur

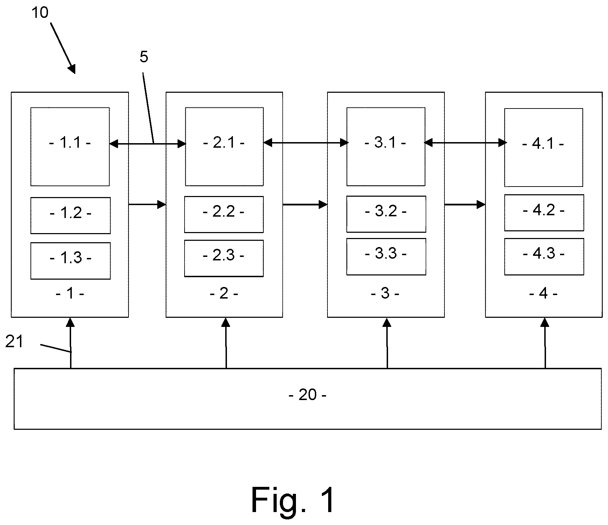

Die **Fig. 1** zeigt eine schematische Darstellung einer Produktionslinie gemäß einem Ausführungsbeispiel der Erfindung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

Die Darstellung in **Fig. 1** zeigt eine schematische Darstellung einer Produktionslinie 10, die aus mehreren, hier vier Nahrungsmittelmaschinen 1, 2, 3, 4 besteht. Die Produktionsline 10, insbesondere die einzelnen Nahrungsmittelmaschinen 1, 2, 3, 4, sind mit einem Auftragsdatenverwaltungssystem 20 verbunden, über welches die Nahrungsmittelmaschinen 1, 2, 3, 4 zur Produktion von in dem Auftragsdatenverwaltungssystem 20 vorgehaltenen Aufträgen konfiguriert werden können.

Die Nahrungsmittelmaschinen 1, 2, 3, 4 umfassen jeweils eine Speichereinheit 1.1, 2.1, 3.1, 4.1, in welcher ein zum Betrieb der ersten Nahrungsmittelmaschine 1 erforderlicher Datensatz gespeichert wird. Ein weiterer Bestandteil der Nahrungsmittelmaschinen ist eine Bedieneinheit 1.2, 2.2, 3.2, 4.2, über welche ein Bediener Eingaben tätigen kann. Diese Eingaben können in Eingabe-Daten zum Betrieb der jeweiligen Nahrungsmittelmaschine 1, 2, 3, 4 gewandelt werden und in der jeweiligen Speichereinheit 1.1, 2.1, 3.1, 4.1 als Teil des Datensatzes gespeichert werden. Die Bedieneinheit 1.2, 2.2, 3.2, 4.2 kann als Teil einer kombinierten Bedien- und Anzeigeeinheit, beispielsweise als berührungsempfindlicher Bildschirm, ausgebildet sein. Ferner umfassen die Nahrungsmittelmaschinen 1, 2, 3, 4 jeweils eine Steuereinheit 1.3, 2.3, 3.3, 4.3, über welche die Steuerung der jeweiligen Nahrungsmittelmaschine 1, 2, 3, 4 erfolgt. Zur Steuerung liest die Steuereinheit 1.3, 2.3, 3.3, 4.3 dabei Daten des jeweiligen Datensatzes aus der Speichereinheit 1.1, 2.1, 3.1, 4.1 der Nahrungsmittelmaschine aus.

Bei der Produktionslinie 10 gemäß dem Ausführungsbeispiel sind vier Nahrungsmittelmaschinen 1, 2, 3, 4 in einem Prozessfluss derart hintereinander vorgesehen, dass die Verarbeitung in einer ersten Nahrungsmittelmaschine 1 beginnt, die Produkte der ersten Nahrungsmittelmaschine 1 an eine zweite Nahrungsmittelmaschine 2 weitergeleitet werden, die Produkte der zweiten Nahrungsmittelmaschine 2 an eine dritte Nahrungsmittelmaschine 3 weitergeleitet werden und die Produkte der dritten Nahrungsmittelmaschine 3 an eine vierte Nahrungsmittelmaschine 4 weitergeleitet werden. Die Nahrungsmittelmaschinen 1, 2, 3, 4, können entweder als Nahrungsmittelverarbeitungsmaschine oder als Nahrungsmittelverpackungsmaschine ausgestaltet sein. Beispielsweise kann die erste Nahrungsmittelmaschine 1 und die zweite Nahrungsmittelmaschine 2 und die dritte Nahrungsmittelmaschine 3 als Nahrungsmittelverarbeitungsmaschine ausgebildet sein und die vierte Nahrungsmittelmaschine 4, die den ersten drei Nahrungsmittelmaschinen 1, 2, 3, im Prozessfluss nachfolgt, als Nahrungsmittelverpackungsmaschine ausgebildet sein.

Um eine möglichst hohe Verfügbarkeit der Produktionslinie 10 zu ermöglichen, sind bei der Produktionsline 10 gemäß dem Ausführungsbeispiel besondere Maßnahmen getroffen. Ein zum Betrieb der ersten Nahrungsmittelmaschine 1 erforderlicher Datensatz ist sowohl in einer ersten Speichereinheit 1.1 der ersten Nahrungsmittelmaschine 1 gespeichert als auch in einer zweiten Speichereinheit 2.1 der zweiten Nahrungsmittelmaschine 2. Hierdurch kann das Wiederherstellen des Datensatzes nach einem Datenverlust in der ersten Speichereinheit 1.1 erleichtert und damit die Verfügbarkeit der Produktionslinie 10 erhöht werden.

Beispielsweise kann ein Bediener der ersten Nahrungsmittelmaschine 1 über die Bedieneinheit 1.2 Eingabe-Daten zum Betrieb der ersten Nahrungsmittelmaschine 1 erzeugen. Diese werden in der ersten Speichereinheit 1.1 gespeichert. Um diese für einen Verlustfall auch in der zweiten Nahrungsmittemaschine vorhalten zu können, werden die Eingabe-Daten bzw. der komplette in der ersten Speichereinheit 1.1. gespeicherte Datensatz über eine drahtlose oder drahtgebundene Kommunikationsverbindung 5 an die zweite Speichereinheit 2.1 der zweiten Nahrungsmittelmaschine 2 übertragen. Der Datensatz kann zusätzlich Benutzer-Daten umfassen, beispielsweise benutzerabhängige Berechtigungsdaten und/oder benutzerabhängige Maschineneinstellungen, z.B. benutzerabhängige Anzeigeeinstellungen.

Bei der Produktionslinie 10 gemäß dem Ausführungsbeispiel werden hinsichtlich der Speichereinheiten 1.1, 2.1, 3.1, 4.1 Pärchen von Nahrungsmittelmaschinen 1, 2, 3, 4 gebildet, die in einer Kette miteinander verschachtelt sind. Das bedeutet, dass die zweite Speichereinheit 2.1 den zum Betrieb der ersten Nahrungsmittelmaschine 1 erforderlichen Datensatz speichert und die dritte Speichereinheit 3.1 der dritte Nahrungsmittelmaschine 3 den zum Betrieb der zweiten Nahrungsmittelmaschine 2 erforderlichen Datensatz speichert. Die vierte Speichereinheit 4.1 der vierten Nahrungsmittelmaschine 4 speichert den zum Betrieb der dritten Nahrungsmittelmaschine 3 erforderlichen Datensatz.

Gemäß einer Abwandlung des Ausführungsbeispiels kann vorgesehen sein, dass sämtliche zum Betrieb der Produktionslinie 10 erforderlichen Datensätze für die einzelnen Nahrungsmittelmaschinen 1, 2, 3, 4 sowohl in der ersten Speichereinheit 1.1 der ersten Nahrungsmittelmaschine 1 als auch in der zweiten Speichereinheit 2.1 der zweiten Nahrungsmittelmaschine 2 gespeichert werden. Bevorzugt werden diese sämtlichen Datensätze auch in der dritten Speichereinheit 3.1 und in der vierten Speichereinheit 4.1, besonders bevorzugt in den Speichereinheiten aller Nahrungsmittelmaschinen 1, 2, 3, 4 der Produktionsline 10, gespeichert.

Die Nahrungsmittelmaschinen 1, 2, 3, 4, insbesondere die jeweilige Steuereinheit 1.3, 2.3, 3.3, 4.3 der Nahrungsmittelmaschinen 1, 2, 3, 4, sind dazu eingerichtet, einen Fehlerzustand der jeweiligen Nahrungsmittelmaschine 1, 2, 3, 4, insbesondere der Speichereinheit 1.1, 2.1, 3.1, 4.1 der Nahrungsmittelmaschine 1, 2, 3, 4 zu erkennen. Ferner sind die Steuereinheiten 1.3, 2.3, 3.3, 4.3 dazu eingerichtet, bei einem erkannten Fehler und/oder einem erkannten Verlust des Datensatzes in der jeweiligen Speichereinheit 1.1, 2.1, 3.1, 4.1 den Datensatz aus der Kopie in einer Speichereinheit 1.1, 2.1, 3.1, 4.1 einer anderen Nahrungsmittelmaschine 1, 2, 3, 4 wiederherzustellen. Beispielsweise kann ein Fehler und/oder einem erkannten Verlust des Datensatzes in der ersten Speichereinheit 1.1 der ersten Nahrungsmittelmaschine 1 erkannt werden und der Datensatz von der zweiten Speichereinheit 2.1 der zweiten Nahrungsmittelmaschine 2 in die erste Speichereinheit 1.1 der ersten Nahrungsmittelmaschine 1 übertragen werden.

Bei der Übertragung der Daten aus der zweiten in die erste Speichereinheit 1.1 kann der vollständige Datensatz übertragen werden. Alternativ ist es möglich, nur solche Daten von der zweiten Speichereinheit 2.1 in die ersten Speichereinheit 1.1 zu übertragen, deren Verlust erkannt worden ist. Beispielsweise kann ein Verlust von Eingabe-Daten bzw. Benutzer-Daten des Datensatzes in der ersten Speichereinheit 1.1 der ersten Nahrungsmittelmaschine 1 erkannt werden und die Eingabe-Daten bzw. Benutzer-Daten des Datensatzes von der zweiten Speichereinheit 2.1 der zweite Nahrungsmittelmaschine 2 in die erste Speichereinheit 1.1 übertragen werden.

Zusätzlich kann vorgesehen sein, dass in dem Fall, dass ein Verlust des Datensatzes in der ersten Speichereinheit 1.1 der ersten Nahrungsmittelmaschine 1 erkannt wird, die erste Nahrungsmittelmaschine 1 durch die zweite Steuereinrichtung 2.3 der zweiten Nahrungsmittelmaschine 2 mithilfe des in der zweiten Speichereinheit 2.1 gespeicherten Datensatzes gesteuert wird. Das Steuern der ersten Nahrungsmittelmaschine 1 durch die zweite Steuereinheit kann temporär erfolgen, beispielsweise solange bis der Datensatz in der ersten Speichereinheit 1.1. wiederhergestellt ist und/oder die erste Nahrungsmittelmaschine wieder vollständig funktionstüchtig ist.

Sobald der Datensatz zum Betrieb der ersten Nahrungsmittelmaschine 1 in der ersten Speichereinheit wiederhergestellt ist, kann die erste Nahrungsmittelmaschine 1 mittels dem Datensatz und der ersten Steuereinheit 1.3 gesteuert werden.

Der Datensatz zum Betrieb der ersten Nahrungsmittelmaschine 1 kann Auftrag-Daten für einen ersten Auftrag umfasst, die von dem Auftragsdatenverwaltungssystem 20 über eine drahtlose oder drahtgebundene Kommunikationsverbindung 21 übertragen werden. Es ist vorstellbar, dass - beispielsweise nach der Übermittlung des ersten Auftrags - ein Ausfall des Auftragsdatenverwaltungssystems 20 vorliegt oder die Kommunikationsverbindung 21 zu dem Auftragsdatenverwaltungssystem 20 defekt ist. In einem solchen Fall, also dann, wenn Auftrag-Daten zu einem zweiten Auftrag durch das Auftragsdatenveraltungssystem 20 nicht zur Verfügung gestellt werden, werden Auftrag-Daten für den ersten Auftrag von der zweiten Speichereinheit 2.1 der zweiten Nahrungsmittelmaschine 2 in die erste Speichereinheit 1.1 übertragen. Eventuell fehlende Auftrag-Daten für den zweiten Auftrag werden, beispielsweise Seriennummern und/oder Chargeninformationen, werden dann manuell angepasst, z.B. durch eine Eingabe eines Bedieners an der ersten Bedieneinheit 1.2 der ersten Nahrungsmittelmaschine 1.

### Bezugszeichenliste

- 1: Nahrungsmittelmaschine
- 1.1: Speichereinheit
- 2: Nahrungsmittelmaschine
- 2.1: Speichereinheit
- 3: Nahrungsmittelmaschine
- 3.1: Speichereinheit
- 4: Nahrungsmittelmaschine
- 4.1: Speichereinheit
- 5: Kommunikationsverbindung
- 10: Produktionslinie
- 20: Auftragsdatenverwaltungssystem

## Patentansprüche

1. Verfahren zum Betrieb einer ersten Nahrungsmittelmaschine (1), insbesondere Nahrungsmittelverarbeitungsmaschine oder Nahrungsmittelverpackungsmaschine, und einer zweiten Nahrungsmittelmaschine (2), insbesondere Nahrungsmittelverarbeitungsmaschine oder Nahrungsmittelverpackungsmaschine,
wobei ein zum Betrieb der ersten Nahrungsmittelmaschine (1) erforderlicher Datensatz in einer ersten Speichereinheit (1.1) der ersten Nahrungsmittelmaschine (1) gespeichert wird, und
wobei der zum Betrieb der ersten Nahrungsmittelmaschine (1) erforderliche Datensatz zusätzlich in einer zweiten Speichereinheit (2.1) der zweiten Nahrungsmittelmaschine (2) gespeichert wird, wobei der zum Betrieb der ersten Nahrungsmittelmaschine (1) erforderliche Datensatz nicht für den Betrieb der zweiten Nahrungsmittelmaschine (2) erforderlich ist,
wobei ein Verlust des Datensatzes in der ersten Speichereinheit (1.1) der ersten Nahrungsmittelmaschine (1) erkannt wird und
der Datensatz von der zweiten Speichereinheit (2.1) der zweite Nahrungsmittelmaschine (2) in die erste Speichereinheit (1.1) übertragen wird und/oder
die erste Nahrungsmittelmaschine (1) durch eine Steuereinrichtung (2.3) der zweiten Nahrungsmittelmaschine (2) mithilfe des in der zweiten Speichereinheit (2.1) gespeicherten Datensatzes gesteuert wird.

2. Verfahren nach Anspruch 1, **dadurch gekennzeichnet, dass** der Datensatz über eine drahtlose oder drahtgebundene Kommunikationsverbindung (5) an die zweite Speichereinheit (2.1) der zweiten Nahrungsmittelmaschine (2) übertragen wird.

3. Verfahren nach einem der vorhergehenden Ansprüche, **dadurch gekennzeichnet, dass** der Datensatz zum Betrieb der ersten Nahrungsmittelmaschine (1), Eingabe-Daten umfasst, die mit einer Eingabeeinrichtung (1.2) der ersten Nahrungsmittelmaschine (1) erfasst werden.

4. Verfahren nach einem der vorhergehenden Ansprüche, **dadurch gekennzeichnet, dass** der Datensatz zum Betrieb der ersten Nahrungsmittelmaschine (1), Benutzer-Daten umfasst.

5. Verfahren nach einem der vorhergehenden Ansprüche, **dadurch gekennzeichnet, dass** ein Verlust von Eingabe-Daten bzw. Benutzer-Daten des Datensatzes in der ersten Speichereinheit (1.1) der ersten Nahrungsmittelmaschine (1) erkannt wird und die Eingabe-Daten bzw. Benutzer-Daten des Datensatzes von der zweiten Speichereinheit (2.1) der zweite Nahrungsmittelmaschine (2) in die erste Speichereinheit (1.1) übertragen werden.

6. Verfahren nach einem der vorhergehenden Ansprüche, **dadurch gekennzeichnet, dass** der Datensatz zum Betrieb der ersten Nahrungsmittelmaschine (1) Auftrag-Daten für einen ersten Auftrag umfasst, die von einem Auftragsdatenverwaltungssystem (20) über eine drahtlose oder drahtgebundene Kommunikationsverbindung (21) übertragen werden.

7. Verfahren nach Anspruch 6, **dadurch gekennzeichnet, dass** dann, wenn Auftrag-Daten zu einem zweiten Auftrag durch das Auftragsdatenveraltungssystem (20) nicht zur Verfügung gestellt werden, Auftrag-Daten für den ersten Auftrag von der zweiten Speichereinheit (2.1) der zweiten Nahrungsmittelmaschine (2) in die erste Speichereinheit (1.1) übertragen werden.

8. Verfahren nach einem der vorhergehenden Ansprüche, wobei die erste Nahrungsmittelmaschine (1) und die zweite Nahrungsmittelmaschine (2) Teil einer gemeinsamen Produktionslinie (10) von mehreren Nahrungsmittelmaschinen (1, 2, 3, 4) sind, die eine dritte (3) Nahrungsmittelmaschine umfasst,
wobei ein zum Betrieb der zweiten Nahrungsmittelmaschine (2) erforderlicher weiterer Datensatz in der zweiten Speichereinheit (2.1) der zweiten Nahrungsmittelmaschine (2) gespeichert wird, und
wobei der zum Betrieb der zweiten Nahrungsmittelmaschine (2) erforderliche weitere Datensatz zusätzlich in einer dritten Speichereinheit (3.1) der dritten Nahrungsmittelmaschine (3) gespeichert wird.

9. Verfahren nach einem der vorhergehenden Ansprüche, wobei die erste Nahrungsmittelmaschine (1) und die zweite Nahrungsmittelmaschine (2) Teil einer gemeinsamen Produktionslinie (10) von mehreren Nahrungsmittelmaschinen (1, 2, 3, 4) sind,
wobei, insbesondere sämtliche, zum Betrieb der Produktionslinie (10) aus mehreren Nahrungsmittelmaschinen (1, 2, 3, 4) erforderliche Datensätze in der ersten Speichereinheit (1.1) der ersten Nahrungsmittelmaschine (1) und in der zweiten Speichereinheit (2.1) der zweiten Nahrungsmittelmaschine (2) gespeichert werden.

10. Verfahren nach einem der Ansprüche 1 bis 7, wobei die erste Nahrungsmittelmaschine (1) und die zweite Nahrungsmittelmaschine (2) Teil einer gemeinsamen Produktionslinie (10) von mehreren Nahrungsmittelmaschinen (1, 2, 3, 4) sind, die eine dritte Nahrungsmittelmaschine (3) umfasst,
wobei ein zum Betrieb der zweiten Nahrungsmittelmaschine (2) erforderlicher weiterer Datensatz in der zweiten Speichereinheit (2.1) der zweiten Nahrungsmittelmaschine (2) gespeichert wird, und
wobei der zum Betrieb der zweiten Nahrungsmittelmaschine (2) erforderliche weitere Datensatz zusätzlich in einer dritten Speichereinheit (3.1) der dritten Nahrungsmittelmaschine (3) gespeichert wird,
wobei ein zum Betrieb der dritten Nahrungsmittelmaschine (3) erforderlicher zusätzlicher Datensatz in der dritten Speichereinheit (3.1) der dritten Nahrungsmittelmaschine (3) gespeichert wird, und
wobei der zum Betrieb der dritten Nahrungsmittelmaschine (3) erforderliche zusätzliche Datensatz zusätzlich in der ersten Speichereinheit (1.1) der ersten Nahrungsmittelmaschine (1) gespeichert wird.

11. Verfahren nach einem der vorhergehenden Ansprüche, **dadurch gekennzeichnet, dass** der zum Betrieb der ersten Nahrungsmittelmaschine (1) erforderliche Datensatz ausgewählt wird, wobei zur Auswahl des Datensatzes ein Indikator durch eine Detektionseinrichtung erfasst wird und durch eine Auswahleinheit der Datensatz in Abhängigkeit von dem erfassten Indikator aus einer Liste vorgegebener Datensätze ermittelt wird.

12. Verfahren nach Anspruch 9, **dadurch gekennzeichnet, dass** der Indikator ein optisch erfassbarer Indikator ist und die Detektionseinrichtung ist eine optische Detektionseinrichtung ist.

13. Produktionslinie umfassend eine erste Nahrungsmittelmaschine (1), insbesondere Nahrungsmittelverarbeitungsmaschine oder Nahrungsmittelverpackungsmaschine, und eine zweite Nahrungsmittelmaschine (2), insbesondere Nahrungsmittelverarbeitungsmaschine oder Nahrungsmittelverpackungsmaschine,
wobei ein zum Betrieb der ersten Nahrungsmittelmaschine (1) erforderlicher Datensatz in einer ersten Speichereinheit (1.1) der ersten Nahrungsmittelmaschine (1) gespeichert ist, und
der zum Betrieb der ersten Nahrungsmittelmaschine (1) erforderliche Datensatz zusätzlich in einer zweiten Speichereinheit (2.1) der zweiten Nahrungsmittelmaschine (2) gespeichert ist, wobei der zum Betrieb der ersten Nahrungsmittelmaschine (1) erforderliche Datensatz nicht für den Betrieb der zweiten Nahrungsmittelmaschine (2) erforderlich ist,
wobei die Produktionslinie dazu konfiguriert ist,
einen Verlust des Datensatzes in der ersten Speichereinheit (1.1) der ersten Nahrungsmittelmaschine (1) zu erkennen und
den Datensatz von der zweiten Speichereinheit (2.1) der zweite Nahrungsmittelmaschine (2) in die erste Speichereinheit (1.1) zu übertragen und/oder
die erste Nahrungsmittelmaschine (1) durch eine Steuereinrichtung (2.3) der zweiten Nahrungsmittelmaschine (2) mithilfe des in der zweiten Speichereinheit (2.1) gespeicherten Datensatzes zu steuern.

## Claims

1. Method for operating a first food machine (1), in particular a food processing machine or food packaging machine, and a second food machine (2), in particular a food processing machine or food packaging machine,
wherein a data set required for operating the first food machine (1) is stored in a first storage unit (1.1) of the first food machine (1), and
wherein the data set required for operating the first food machine (1) is additionally stored in a second storage unit (2.1) of the second food machine (2), wherein the data set required for operating the first food machine (1) is not required for operating the second food machine (2),
wherein a loss of the data set in the first storage unit (1.1) of the first food machine (1) is detected, and
the data set is transferred from the second storage unit (2.1) of the second food processing machine (2) to the first storage unit (1.1) and/or
the first food machine (1) is controlled by a control device (2.3) of the second food machine (2) using the data set stored in the second storage unit (2.1).

2. Method according to claim 1, **characterized in that** the data set is transferred to the second storage unit (2.1) of the second food machine (2) via a wireless or wired communication connection (5).

3. Method according to one of the preceding claims, **characterized in that** the data set for operating the first food machine (1) comprises input data that is recorded with an input device (1.2) of the first food machine (1).

4. Method according to one of the preceding claims, **characterized in that** the data set for operating the first food machine (1) comprises user data.

5. Method according to one of the preceding claims, **characterized in that** a loss of input data or user data of the data set in the first storage unit (1.1) of the first food machine (1) is detected and the input data or user data of the data set is transferred from the second storage unit (2.1) of the second food processing machine (2) to the first storage unit (1.1).

6. Method according to one of the preceding claims, **characterized in that** the data set for operating the first food machine (1) comprises order data for a first order, which is transferred from an order data management system (20) via a wireless or wired communication connection (21).

7. Method according to claim 6, **characterized in that**, if order data for a second order is not provided by the order data management system (20), order data for the first order is transferred from the second storage unit (2.1) of the second food machine (2) to the first storage unit (1.1).

8. Method according to one of the preceding claims, wherein the first food machine (1) and the second food machine (2) are part of a common production line (10) of several food machines (1, 2, 3, 4) comprising a third (3) food machine,
wherein a further data set required for operating the second food machine (2) is stored in the second storage unit (2.1) of the second food machine (2), and
wherein the further data set required for operating the second food machine (2) is additionally stored in a third storage unit (3.1) of the third food machine (3).

9. Method according to one of the preceding claims, wherein the first food machine (1) and the second food machine (2) are part of a common production line (10) of several food machines (1, 2, 3, 4),
wherein, in particular all, data sets required for operating the production line (10) comprising a plurality of food machines (1, 2, 3, 4) are stored in the first storage unit (1.1) of the first food machine (1) and in the second storage unit (2.1) of the second food machine (2).

10. Method according to one of claims 1 to 7, wherein the first food machine (1) and the second food machine (2) are part of a common production line (10) of several food machines (1, 2, 3, 4) comprising a third food machine (3),
wherein a further data set required for operating the second food processing machine (2) is stored in the second storage unit (2.1) of the second food processing machine (2), and
wherein the further data set required for operating the second food machine (2) is additionally stored in a third storage unit (3.1) of the third food machine (3),
wherein an additional data set required for operating the third food machine (3) is stored in the third storage unit (3.1) of the third food machine (3), and
wherein the additional data set required for operating the third food machine (3) is additionally stored in the first storage unit (1.1) of the first food machine (1).

11. Method according to one of the preceding claims, **characterized in that** the data set required for operating the first food machine (1) is selected, wherein, in order to select the data set, an indicator is detected by a detection device and the data set is determined from a list of predetermined data sets by a selection unit depending on the detected indicator.

12. Method according to claim 9, **characterized in that** the indicator is an optically detectable indicator and the detection device is an optical detection device.

13. Production line comprising a first food machine (1), in particular a food processing machine or food packaging machine, and a second food machine (2), in particular a food processing machine or food packaging machine,
wherein a data set required for operating the first food machine (1) is stored in a first storage unit (1.1) of the first food machine (1), and
the data set required for operating the first food machine (1) is additionally stored in a second storage unit (2.1) of the second food machine (2), wherein the data set required for operating the first food machine (1) is not required for operating the second food machine (2),
wherein the production line is configured to
detect a loss of the data set in the first storage unit (1.1) of the first food machine (1) and
transfer the data set from the second storage unit (2.1) of the second food processing machine (2) to the first storage unit (1.1) and/or
control the first food machine (1) by means of a control device (2.3) of the second food machine (2) using the data set stored in the second storage unit (2.1).

## Revendications

1. Procédé pour faire fonctionner une première machine alimentaire (1), en particulier une machine de transformation alimentaire ou une machine d'emballage alimentaire, et une deuxième machine alimentaire (2), en particulier une machine de transformation alimentaire ou une machine d'emballage alimentaire,
un ensemble de données nécessaires au fonctionnement de la première machine alimentaire (1) étant enregistré dans une première unité de mémoire (1.1) de la première machine alimentaire (1), et
dans lequel l'ensemble de données nécessaire au fonctionnement de la première machine alimentaire (1) est en outre enregistré dans une deuxième unité de mémoire (2.1) de la deuxième machine alimentaire (2), l'ensemble de données nécessaire au fonctionnement de la première machine alimentaire (1) n'étant pas nécessaire au fonctionnement de la deuxième machine alimentaire (2),
une perte de l'ensemble de données dans la première unité de mémoire (1.1) de la première machine alimentaire (1) étant détectée et
l'ensemble de données est transféré de la deuxième unité de mémoire (2.1) de la deuxième machine alimentaire (2) vers la première unité de mémoire (1.1) et/ou
la première machine alimentaire (1) est commandée par un dispositif de commande (2.3) de la deuxième machine alimentaire (2) à l'aide de l'ensemble de données enregistré dans la deuxième unité de mémoire (2.1).

2. Procédé selon la revendication 1, **caractérisé en ce que** l'ensemble de données est transféré à la deuxième unité de mémoire (2.1) de la deuxième machine alimentaire (2) via une connexion de communication sans fil ou filaire (5).

3. Procédé selon l'une des revendications précédentes, **caractérisé en ce que** l'ensemble de données pour le fonctionnement de la première machine alimentaire (1) comprend des données d'entrée qui sont saisies à l'aide d'un dispositif d'entrée (1.2) de la première machine alimentaire (1).

4. Procédé selon l'une des revendications précédentes, **caractérisé en ce que** l'ensemble de données pour le fonctionnement de la première machine alimentaire (1) comprend des données utilisateur.

5. Procédé selon l'une des revendications précédentes, **caractérisé en ce qu'**une perte de données d'entrée ou de données utilisateur de l'ensemble de données dans la première unité de mémoire (1.1) de la première machine alimentaire (1) est détectée et les données d'entrée ou les données utilisateur de l'ensemble de données sont transférées de la deuxième unité de mémoire (2.1) de la deuxième machine alimentaire (2) sont transférées dans la première unité de mémoire (1.1).

6. Procédé selon l'une des revendications précédentes, **caractérisé en ce que** l'ensemble de données pour le fonctionnement de la première machine alimentaire (1) comprend des données de commande pour une première commande, qui sont transférées par un système de gestion des données de commande (20) via une connexion de communication sans fil ou filaire (21).

7. Procédé selon la revendication 6, **caractérisé en ce que**, lorsque les données de commande pour une deuxième commande ne sont pas fournies par le système de gestion des données de commande (20), les données de commande pour la première commande sont transférées de la deuxième unité de mémoire (2.1) de la deuxième machine alimentaire (2) vers la première unité de mémoire (1.1).

8. Procédé selon l'une des revendications précédentes, dans lequel la première machine alimentaire (1) et la deuxième machine alimentaire (2) font partie d'une ligne de production commune (10) de plusieurs machines alimentaires (1, 2, 3, 4) qui comprend une troisième machine alimentaire (3),
un autre ensemble de données nécessaire au fonctionnement de la deuxième machine alimentaire (2) étant enregistré dans la deuxième unité de mémoire (2.1) de la deuxième machine alimentaire (2), et
dans lequel l'autre ensemble de données nécessaire au fonctionnement de la deuxième machine alimentaire (2) est également enregistré dans une troisième unité de mémoire (3.1) de la troisième machine alimentaire (3).

9. Procédé selon l'une des revendications précédentes, dans lequel la première machine alimentaire (1) et la deuxième machine alimentaire (2) font partie d'une ligne de production commune (10) de plusieurs machines alimentaires (1, 2, 3, 4),
tous les ensembles de données nécessaires au fonctionnement de la ligne de production (10) composée de plusieurs machines alimentaires (1, 2, 3, 4) étant enregistrés dans la première unité de mémoire (1.1) de la première machine alimentaire (1) et dans la deuxième unité de mémoire (2.1) de la deuxième machine alimentaire (2).

10. Procédé selon l'une des revendications 1 à 7, dans lequel la première machine alimentaire (1) et la deuxième machine alimentaire (2) font partie d'une ligne de production commune (10) de plusieurs machines alimentaires (1, 2, 3, 4) qui comprend une troisième machine alimentaire (3),
un autre ensemble de données nécessaire au fonctionnement de la deuxième machine alimentaire (2) étant enregistré dans la deuxième unité de mémoire (2.1) de la deuxième machine alimentaire (2), et
selon lequel l'autre ensemble de données nécessaire au fonctionnement de la deuxième machine alimentaire (2) est en outre enregistré dans une troisième unité de mémoire (3.1) de la troisième machine alimentaire (3),
un ensemble de données supplémentaire nécessaire au fonctionnement de la troisième machine alimentaire (3) étant enregistré dans la troisième unité de mémoire (3.1) de la troisième machine alimentaire (3), et
selon lequel de données supplémentaire nécessaire au fonctionnement de la troisième machine alimentaire (3) étant en outre enregistré dans la première unité de mémoire (1.1) de la première machine alimentaire (1).

11. Procédé selon l'une des revendications précédentes, **caractérisé en ce que** l' ensemble de données nécessaire au fonctionnement de la première machine alimentaire (1) est sélectionné, un indicateur étant détecté par un dispositif de détection pour la sélection de l'ensemble de données et l'ensemble de données étant déterminé par une unité de sélection à partir d'une liste du ensembles de données prédéfinis en fonction de l'indicateur détecté.

12. Procédé selon la revendication 9, **caractérisé en ce que** l'indicateur est un indicateur détectable optiquement et le dispositif de détection est un dispositif de détection optique.

13. Ligne de production comprenant une première machine alimentaire (1), en particulier une machine de transformation alimentaire ou une machine d'emballage alimentaire, et une deuxième machine alimentaire (2), en particulier une machine de transformation alimentaire ou une machine d'emballage alimentaire,
un ensemble de données nécessaires au fonctionnement de la première machine alimentaire (1) étant enregistré dans une première unité de mémoire (1.1) de la première machine alimentaire (1), et
l'ensemble de données nécessaire au fonctionnement de la première machine alimentaire (1) est en outre enregistré dans une deuxième unité de mémoire (2.1) de la deuxième machine alimentaire (2), l'ensemble de données nécessaire au fonctionnement de la première machine alimentaire (1) n'étant pas nécessaire au fonctionnement de la deuxième machine alimentaire (2),
la ligne de production étant configurée pour
détecter une perte de l'ensemble de données dans la première unité de mémoire (1.1) de la première machine alimentaire (1) et
de transférer l'ensemble de données de la deuxième unité de mémoire (2.1) de la deuxième machine alimentaire (2) vers la première unité de mémoire (1.1) et/ou
de commander la première machine alimentaire (1) par un dispositif de commande (2.3) de la deuxième machine alimentaire (2) à l'aide de l'ensemble de données enregistré dans la deuxième unité de mémoire (2.1).
